# EUROPEAN PATENT APPLICATION

(11) **EP 4 660 951 A1**
(43) Date of publication of application: **10.12.2025**
(21) Application number: 23924915.4
(22) Date of filing: 20.09.2023
(51) Int. Cl.: G06T 11/00

(54) **GRAPHICS PROCESSING UNIT AND GRAPHICS DRAWING METHOD**

(30) Priority: 27.02.2023 CN 202310231313
(71) Applicant: Huawei Technologies Co., Ltd., Shenzhen, Guangdong 518129 (CN)
(72) Inventor: ZHANG, Tao, Shenzhen, Guangdong 518129 (CN); WU, Renchu, Shenzhen, Guangdong 518129 (CN); HU, Jiajun, Shenzhen, Guangdong 518129 (CN)
(74) Representative: Epping - Hermann - Fischer
(86) International application number: PCT/CN2023/120132
(87) International publication number: WO 2024/178961

(57) **Abstract**

Embodiments of this application provide a graphics processing unit and a graphics drawing method, and relate to the field of chip technologies, to resolve a problem of overdrawing when an existing graphics processing unit executes a drawing task. A specific solution is as follows: A graphics processing unit includes a culling module and a shader processor, the culling module includes a register and an overdraw culling module, and an output end of the overdraw culling module is coupled to an input end of the shader processor. The register is configured to store indication information, where the indication information indicates a sub-region that is involved in an overdraw culling operation and that is in a graphic region of a drawing task. The overdraw culling module is configured to: record position information of a plurality of fragments of the drawing task in the graphic region and ranking information of the plurality of fragments involved in drawing, perform the overdraw culling operation on a fragment in the sub-region based on the position information and the ranking information, and send, to the shader processor, a fragment in the plurality of fragments that needs to be drawn. The shader processor is configured to perform shading on the fragment in the plurality of fragments that needs to be drawn.

## Description

This application claims priority to Chinese Patent Application No. 202310231313.7, filed with the China National Intellectual Property Administration on February 27, 2023 and entitled "GRAPHICS PROCESSING UNIT AND GRAPHICS DRAWING METHOD", which is incorporated herein by reference in its entirety.

### TECHNICAL FIELD

Embodiments of this application relate to the field of chip technologies, and in particular, to a graphics processing unit and a graphics drawing method.

### BACKGROUND

Currently, a three-dimensional scene processed by a graphics processing unit (graphics processing unit, GPU) includes a plurality of objects, and each object includes a plurality of basic graphical elements (for example, a triangle, a line, and a point). When a drawing task is processed, the objects are sent to the graphics processing unit in a sequence specified by an application. To be specific, the basic graphical elements of each object are sent to the graphics processing unit in a sequence of the basic graphical elements in the object, and the graphics processing unit performs a series of processing to obtain a final pixel color. A fragment shader program usually executes highest workload. To reduce working overheads of the fragment shader program, the graphics processing unit performs a plurality of types of algorithm processing, for example, performs deep culling by using depth information of the object, to reduce a quantity of tasks of the fragment shader program.

With continuous expansion of application scenarios of the graphics processing unit, in addition to a three-dimensional application, a two-dimensional user interface (user interface, UI) application also extensively uses the graphics processing unit for drawing. In two-dimensional user interface drawing, there may be no depth information, and a culling algorithm cannot be executed in a scenario in which there is a special operation. Therefore, the graphics processing unit still has an overdrawing problem, resulting in high workload of a shader processor.

### SUMMARY

Embodiments of this application provide a graphics processing unit and a graphics drawing method, to resolve a problem of overdrawing when an existing graphics processing unit executes a drawing task.

To achieve the foregoing objectives, the following technical solutions are used in embodiments of this application.

According to a first aspect, an embodiment of this application provides a graphics processing unit. The graphics processing unit includes a culling module and a shader processor, the culling module includes a register and an overdraw culling module, and an output end of the overdraw culling module is coupled to an input end of the shader processor. The register is configured to store indication information, where the indication information indicates a sub-region that is involved in an overdraw culling operation and that is in a graphic region of a drawing task. The overdraw culling module is configured to: record position information of a plurality of fragments of the drawing task in the graphic region and ranking information of the plurality of fragments involved in drawing, perform the overdraw culling operation on a fragment in the sub-region based on the position information and the ranking information, and send, to a shader processor, a fragment in the plurality of fragments that needs to be drawn. The shader processor is configured to perform shading on the fragment in the plurality of fragments that needs to be drawn. The sub-region involved in the overdraw culling operation may be a region in which a bending operation, a stencil comparison operation, and an instruction discard operation are performed.

In comparison with the conventional technology in which there is a problem that a shader processor in a graphics processing unit cannot execute a culling algorithm in a scenario in which a blend operation, a stencil comparison operation, and an instruction discard operation occur, in embodiments of this application, the graphics processing unit first determines, based on the indication information stored in the register, the sub-region involved in the overdraw culling operation, and then, before the shader processor performs shading on the fragment, the overdraw culling module other than the shader processor performs the overdraw culling operation on the sub-region involved in the overdraw culling operation. Even if a fragment without depth information in a two-dimensional scene exists in the sub-region involved in the overdraw culling operation, the overdraw culling operation may still be performed on the fragment without depth information in the two-dimensional scene. This not only can avoid a problem that the shader processor cannot execute the culling algorithm in the scenario in which the blend operation, the stencil comparison operation, and the instruction discard operation occur, but also can send the fragment that needs to be drawn to the shader processor on a basis of culling a fragment that does not need to be drawn in the sub-region, so that overdrawing can be effectively reduced, load of the shader processor can be reduced, performance of the graphics processing unit can be improved, and power consumption can be reduced.

In a possible design, the overdraw culling operation is culling fragments, in the plurality of fragments, that have same position information and whose ranking information indicates a top ranking.

In this design, when the position information is the same, in the fragments, a low-ranked fragment g can cover a top-ranked fragment, and the top-ranked fragment is culled, so that instruction overheads of the fragment can be reduced, and overdrawing is reduced.

In a possible design, the overdraw culling module is further configured to send a fragment outside the sub-region to the shader processor based on the position information and the ranking information.

In this design, for a fragment outside the sub-region, the overdraw culling module does not process the fragment, and only transparently transmits the fragment to the shader processor. Therefore, a processing process of the fragment can be omitted, and efficiency of the graphics processing unit can be improved.

In a possible design, the indication information includes a region range of the sub-region and a first identifier, and the first identifier indicates that a range region involved in the overdraw culling operation is inside the region range of the sub-region.

In this design, the region range of the sub-region may be a closed curve described by using a mathematical formula, or may be specified by using an input image or texture. The range of the region involved in the overdraw culling operation may be flexibly set by using the first identifier, and is applicable to a plurality of drawing scenarios.

In a possible design, the indication information includes a region range of the sub-region and a second identifier, and the second identifier indicates that a range region involved in the overdraw culling operation is outside the region range of the sub-region.

In this design, the region range of the sub-region may be a closed curve described by using a mathematical formula, or may be specified by using an input image or texture. The range of the region involved in the overdraw culling operation may be flexibly set by using the second identifier, and is applicable to a plurality of drawing scenarios.

In a possible design, the culling module further includes a stencil test module; and the stencil test module is configured to: receive a plurality of fragments, and determine, based on a result of comparison between a stencil reference value and stencil values of the plurality of fragments and, whether to cull the fragments.

In this design, the stencil test module may perform preliminary culling on the fragment, to cull a fragment that does not need to be drawn, thereby effectively reducing overdrawing, reducing load of the shader processor, improving performance of the graphics processing unit, and reducing power consumption.

In a possible design, the culling module further includes a depth test module, and the plurality of fragments include a depth fragment; and the depth test module is configured to determine, based on a result of comparison between a depth value of the depth fragment in the plurality of fragments and a value of a depth buffer, whether to cull the fragment. In this design, the depth test module may perform preliminary culling on the fragment, to cull a fragment that does not need to be drawn, thereby effectively reducing overdrawing, reducing load of the shader processor, improving performance of the graphics processing unit, and reducing power consumption.

According to a second aspect, an embodiment of this application provides a graphics drawing method. The method is applied to a graphics processing unit, the graphics processing unit includes a culling module and a shader processor, the culling module includes a register and an overdraw culling module, an output end of the overdraw culling module is coupled to an input end of the shader processor, and the method includes: storing indication information, where the indication information indicates a sub-region that is involved in an overdraw culling operation and that is in a graphic region of a drawing task; recording position information of a plurality of fragments of the drawing task in the graphic region and ranking information of the plurality of fragments involved in drawing, performing the overdraw culling operation on a fragment in the sub-region based on the position information and the ranking information, sending, to the shader processor, a fragment in the plurality of fragments that needs to be drawn; and performing shading on the fragment in the plurality of fragments that needs to be drawn.

For beneficial effects of the second aspect, refer to beneficial effects of the first aspect.

In a possible design, the overdraw culling operation is culling fragments, in the plurality of fragments, that have same position information and whose ranking information indicates a top ranking.

In a possible design, before performing shading on the fragment in the plurality of fragments that needs to be drawn, the method further includes: sending a fragment outside the sub-region to the shader processor based on the position information and the ranking information.

In a possible design, the indication information includes a region range of the sub-region and a first identifier, and the first identifier indicates that a range region involved in the overdraw culling operation is inside the region range of the sub-region.

In a possible design, the indication information includes a region range of the sub-region and a second identifier, and the second identifier indicates that a range region involved in the overdraw culling operation is outside the region range of the sub-region.

In a possible design, the culling module further includes a stencil test module, and before recording the position information of the plurality of fragments of the drawing task in the graphic region and the ranking information of the plurality of fragments involved in drawing, the method further includes: receiving a plurality of fragments, and determining, based on a result of comparison between a stencil reference value and stencil values of the plurality of fragments, whether to cull the fragments.

In a possible design, the culling module further includes a depth test module, the plurality of fragments include a depth fragment, and the method further includes: determining whether to cull the fragment based on a result of comparison between a depth value of the depth fragment in the plurality of fragments and a value of a depth buffer.

According to a third aspect, an embodiment of this application provides a computer-readable storage medium, including computer instructions. When the computer instructions are run on an electronic device, the electronic device is enabled to perform the graphics drawing method according to any one of the foregoing aspects and the possible implementations.

According to a fourth aspect, an embodiment of this application provides a computer program product. When the computer program product runs on a computer or a processor, the computer or the processor is enabled to perform the graphics drawing method according to any one of the foregoing aspects and the possible implementations. According to a fifth aspect, an embodiment of this application provides a chip system. The system may include a wireless access device and at least one electronic device according to any one of the foregoing aspects and the possible implementations. The electronic device and the wireless access device may perform the graphics drawing method according to any one of the foregoing aspects and the possible implementations.

It may be understood that the graphics processing unit, the chip system, the computer-readable storage medium, the computer program product, or the like provided above may be applied to the corresponding method provided above. Therefore, for beneficial effect that can be achieved by the graphics processing unit, the chip system, the computer-readable storage medium, the computer program product, or the like, refer to the beneficial effect in the corresponding method. Details are not described herein again.

These aspects or other aspects in this application are more concise and comprehensible in the following descriptions.

### BRIEF DESCRIPTION OF DRAWINGS

FIG. 1 is a diagram of a structure of an execution device according to an embodiment of this application;
FIG. 2 is a diagram of an internal architecture of an execution device according to an embodiment of this application;
FIG. 3 is a diagram of an internal architecture of a graphics processing unit according to an embodiment of this application;
FIG. 4 is a diagram of a structure of a graphics processing unit according to an embodiment of this application;
FIG. 5 is a diagram of a region range of a sub-region according to an embodiment of this application;
FIG. 6 is a diagram of another region range of a sub-region according to an embodiment of this application;
FIG. 7 is a diagram of a structure of a culling module according to an embodiment of this application;
FIG. 8 is a processing flowchart of a graphics processing unit according to an embodiment of this application;
FIG. 9 is a flowchart of a graphics drawing method according to an embodiment of this application;
FIG. 10 is a flowchart of another graphics drawing method according to an embodiment of this application; and
FIG. 11 is a processing flowchart of a graphics processing unit according to an embodiment of this application.

### DESCRIPTION OF EMBODIMENTS

For ease of understanding, some concepts related to embodiments of this application are described for reference by using examples. Details are as follows:
A graphics processing unit (graphics processing unit, GPU), also referred to as a display core, a visual processor, a display chip, or the like, is a microprocessor that specifically performs an image computing operation on a personal computer, a workstation, a game machine, and some mobile devices (such as a tablet computer and a smartphone).

The graphics processing unit performs conversion driving on display information required by a computer system, and provides a scanning signal to a display, to control correct displaying of the display.

A blend (blend) operation is an operation of generating a plurality of special paths between two original paths. The blend operation can be performed to gradually change one shape to another shape, so as to obtain a three-dimensional effect.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the description of embodiments, unless otherwise specified, "a plurality of" means two or more.

Currently, to reduce workload of a fragment shader, a Mali (Mali) GPU is provided in the conventional technology, and
the Mali GPU may resolve an overdrawing problem by using a forward pixel kill (forward pixel kill, FPK) technology. In the Mali GPU, before entering a shader processor (shader processor) to execute an instruction, a fragment that has undergone a depth test and a stencil test first enters a first in first out (first in first out, FIFO) queue of the shader processor for queuing. After a new fragment enters the queue, a fragment at the front of the queue is checked in the queue. If a fragment that enters the queue later overlaps a previous fragment in a screen position, and can cover the previous fragment in depth or ranking, the new fragment is used to replace the previous fragment. In this way, instruction overheads of the previous fragment are reduced, and overdrawing is reduced.

However, the FPK technology has a strict requirement on an application scenario. The FPK technology is not applicable to a scenario in which operations such as blend (blend), stencil comparison, and instruction discard (shader discard) exist. Otherwise, a function error occurs in the graphics processing unit.

Due to the overdrawing problem in the conventional technology, namely, a problem that culling cannot be performed on a drawn object in case of special operations such as a blend operation, a stencil comparison operation, and an instruction discard operation, workload of the fragment shader is high.

Therefore, in embodiments of this application, the graphics processing unit is improved, and an overdraw culling module is newly added. The overdraw culling module performs an overdraw culling operation in a sub-region in which special operations such as a blend operation, a stencil comparison operation, and an instruction discard operation occur. In addition, the overdraw culling operation is also performed on a fragment without depth information, to reduce load of the shader processor, improve performance of the graphics processing unit, and reduce power consumption.

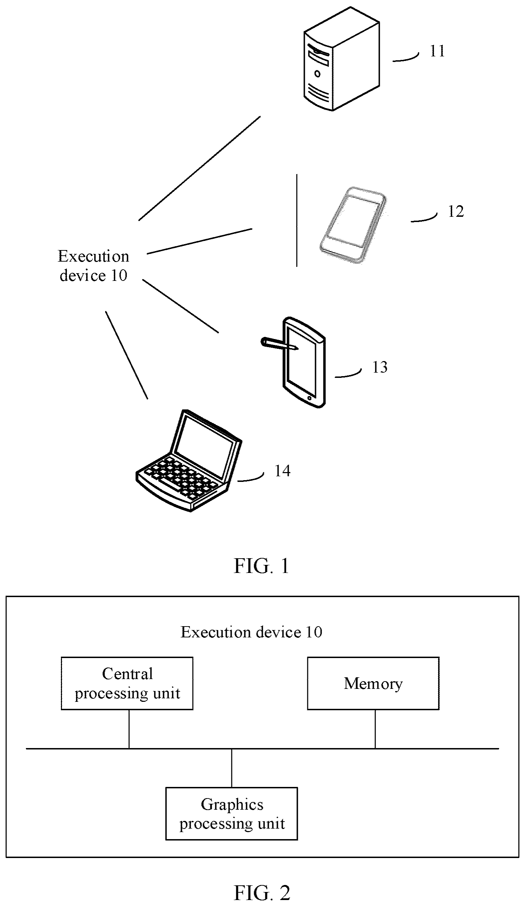

The graphics processing unit provided in embodiments of this application may be used in different devices, for example, used in an execution device 10 shown in FIG. 1. FIG. 1 is a diagram of a structure of the execution device according to an embodiment of this application. The execution device 10 may be a terminal, for example, a server 11, a mobile phone terminal 12, a tablet computer 13, a notebook computer 14, an augmented reality (augmented reality, AR) device (not shown in FIG. 1), a virtual reality (virtual reality, VR) device (not shown in FIG. 1), an in-vehicle terminal (not shown in FIG. 1), or the like.

FIG. 2 is a diagram of an internal architecture of the execution device according to an embodiment of this application. The execution device 10 may include a graphics processing unit, a central processing unit (central processing unit, CPU), a memory, and the like. The memory may include a read-only memory (read-only memory, ROM) and a random access memory (random access memory, RAM). The execution device 10 may be further configured with an input/output (input/output, I/O) interface (not shown in FIG. 2), and is configured to exchange data with an external device. For example, a user may input data to the I/O interface via the external device. In this embodiment of this application, the input data may include: An image that needs to be drawn may be an image acquired by the execution device 10 via a data collection device, may be an image in a database of the execution device 10, may be an image from a client device, or the like.

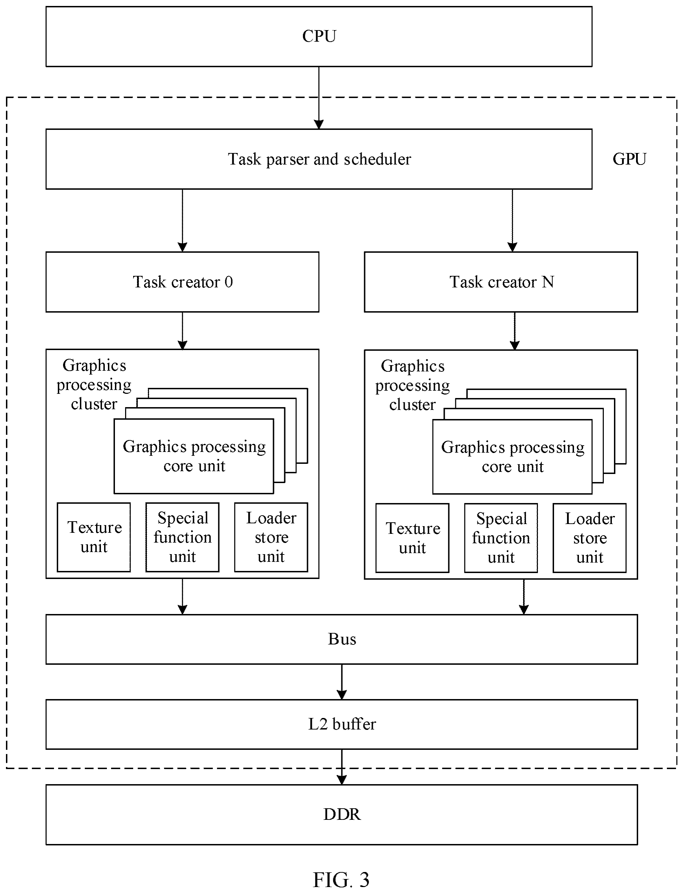

FIG. 3 is a diagram of a structure of a graphics processing unit according to an embodiment of this application. The graphics processing unit may include a task parser and scheduler, a plurality of shading task creators (a task creator 0 to a task creator N in FIG. 3, where N is a positive integer), a graphics processing cluster, a bus, a buffer (for example, an L2 buffer), and the like.

In some embodiments, a graphics driver is in a chip corresponding to a CPU, and the CPU may send a drawing task to the GPU. The task parser and scheduler of the GPU parses the task and schedules the task based on a task priority. Generally, in graphics, there are a plurality of types of shaders, for example, a vertex shader (vertex shader), a geometry shader (geometry shader), and a fragment shader (fragment shader). When a task is delivered to the task creator via the task parser and scheduler, the task creator may be configured to: create a task and send the task to the graphics processing cluster. The graphics processing cluster includes M graphics processing core (graphics processing core) units, where M is a positive integer. For example, there are four, eight, or 16 graphics processing core units. The M graphics processing core units may execute different shader program instructions in parallel.

In some embodiments, one graphics processing cluster may further include a shader unit, a texture unit (texture unit), a loader store (loader store) unit, and a special function unit (special function unit). A conventional instruction may be executed in the graphics processing core unit. Complex texture instructions, memory loading and storage instructions, and special function instructions are executed by independent co-processors (including the texture unit, the loader store unit, and the special function unit). One graphics processing cluster may include N texture units, a loader store unit, and a special function unit.

For example, the shader unit is configured to execute a shader program, where texture-related instructions are sent to the texture unit for processing, memory loading and storage instructions are sent to the loader store unit for processing, and special functions are sent to the special function unit for processing. A conventional arithmetic instruction, a jump instruction, a logic operation instruction, and the like are processed by an arithmetic and logic unit (arithmetic and logic unit, ALU) operation unit inside the shader unit. After obtaining a texture and filtering the texture, the texture unit sends a filtering result back to the shader unit, and the shader unit continues to complete a remaining instruction operation.

In some embodiments, the GPU may include S graphics processing clusters. For example, S may be 8, 16, or the like. Both the texture unit and the loader store unit may load data to or store data in a memory. When an access request for the GPU is sent to the L2 buffer through the bus, if the access request is not hit in the L2 buffer, the access request is sent to the memory (DDR) through a memory interface for data reading or storage. When the access request is a read request, a read result is returned to a corresponding module of the graphics processing cluster.

In this embodiment of this application, the graphics processing unit is improved. In the graphics processing cluster, an overdraw culling module is newly added. Before a fragment is shaded, the overdraw culling module culls a fragment that does not need to be drawn in fragments, and sends only a fragment that needs to be drawn to the shader processor for processing.

The graphics processing unit provided in this embodiment of this application receives a drawing task of an application (application, APP), and performs a computing operation. Various real-time drawing tasks can be completed through cooperation of the graphics processing unit and the application, such as a game and an application program user interface. The application sets, through an application programing interface (application programing interface, API), a sub-region that is involved in an overdraw culling operation and that is in a graphic region of the drawing task, namely, a region in which operations such as a blend operation, a stencil comparison operation, and an instruction discard operation are performed. The application sends indication information of the sub-region to the graphics processing unit through the API, and the graphics processing unit processes the drawing task based on the indication information. On a device like a mobile phone or a tablet computer, the application enables a function of the graphics processing unit through the API, so that performance can be improved, load and power consumption can be reduced, and a battery life can be prolonged.

The following describes the graphics processing unit provided in embodiments of this application.

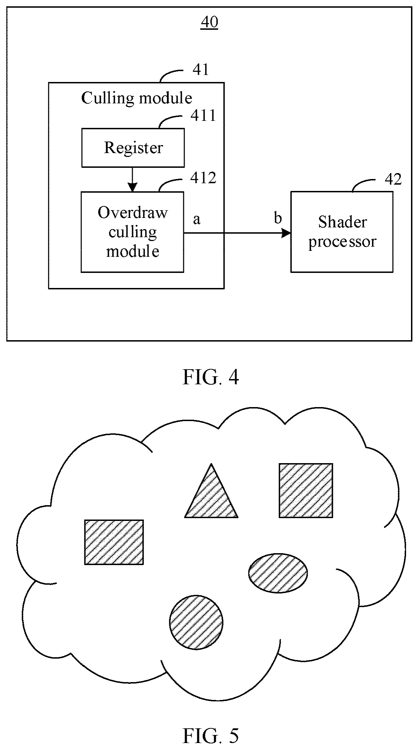

An embodiment of this application provides a graphics processing unit 40. FIG. 4 is a diagram of a structure of a graphics processing unit according to an embodiment of this application. The graphics processing unit 40 includes a culling module 41 and a shader processor 42. The culling module 41 includes a register 411 and an overdraw culling module 412, and an output end (for example, an output end a in FIG. 4) of the overdraw culling module 412 is coupled to an input end (for example, an input end b in FIG. 4) of the shader processor 42.

The register 411 is configured to store indication information, where the indication information indicates a sub-region that is involved in an overdraw culling operation and that is in a graphic region of a drawing task.

For example, the register 411 may be an interface register, and the register 411 may be accessed by both an internal circuit and an external circuit or an application. In an example, the register 411 may temporarily store indication information sent by the application.

For example, the indication information is generated by the application based on the drawing task. For a display interface of a common UI application on a device like a vehicle-mounted screen, a mobile phone, a tablet, or a computer, for example, a commodity display page or an album browsing page of a shopping platform, an application invokes an API to set a region for a special operation, namely, a region in which operations such as a blend operation, a stencil comparison operation, and an instruction discard operation are performed, generate indication information, and send the indication information to the register 411.

In addition, the graphic region of the drawing task may be understood as a region of the display interface, for example, may be a display (display) subsystem of a mobile phone or a display.

The overdraw culling module 412 is configured to: record position information of a plurality of fragments of the drawing task in the graphic region and ranking information of the plurality of fragments involved in drawing, perform the overdraw culling operation on a fragment in the sub-region based on the position information and the ranking information, and send, to the shader processor 42, a fragment in the plurality of fragments that needs to be drawn. For example, the fragment is a point that is in a two-dimensional image and that includes a color, depth information, and texture data. The plurality of fragments may include a depth fragment and a depthless fragment. The depth fragment is a fragment with depth information, and the depthless fragment is a fragment without depth information. The depth information may be a distance between each point in space and a camera.

The overdraw culling module 412 may execute two procedures: a procedure of generating a relationship between fragments and an overdrawing test procedure. The procedure of generating a relationship between fragments may include the following steps. The overdraw culling module 412 records position information of the depth fragment and the depthless fragment in the graphic region and ranking information of the fragments involved in drawing, and determines, through comparison, whether the position information of the fragment in the graphic region is located in the sub-region involved in the overdraw culling operation. The overdrawing test procedure may include: The overdraw culling module 412 performs an overdraw culling operation, culls a fragment that does not need to be drawn in the sub-region, and sends the fragment that needs to be drawn to the shader processor 42. The fragment that does not need to be drawn may be understood as a fragment that does not contribute to a pixel color in a final display interface. For example, the overdraw culling module 412 may cull a fragment corresponding to a background UI element or an intermediate invalid layer in a layer superimposition process, cull a fragment that does not contribute to the final pixel color, and send only the fragment that contributes to the shader processor 42 for processing. In this way, overdrawing can be effectively reduced, load of the shader processor can be reduced, performance of the graphics processing unit can be improved, and power consumption can be reduced.

The shader processor 42 is configured to perform shading on the fragment in the plurality of fragments that needs to be drawn.

For example, the shader processor 42 performs a shading instruction operation, to perform shading on the fragment in the plurality of fragments that needs to be drawn. The shader processor 42 writes a final calculation result into a frame buffer through a processing operation, and finally displays a result of the frame buffer on the display interface. Therefore, in comparison with an FPK technology in which a culling operation is performed in a FIFO queue of the shader processor, the graphics processing unit 40 provided in this embodiment of this application performs an overdraw culling operation in the overdraw culling module 412 before the shader processor 42. The overdraw culling module 412 may be understood as a buffer (buffer). Compared with the FIFO queue, the overdraw culling module 412 can process more fragments, so that an overdrawing case can be effectively reduced, and load of the shader processor 42 can be reduced.

Optionally, the overdraw culling operation is culling fragments, in the plurality of fragments, that have same position information and whose ranking information indicates a top ranking.

For example, for the background UI element, the intermediate invalid layer, and the like in the layer superimposition process, it is assumed that there are a fragment 1 and a fragment 2. Position information of the fragment 1 and the fragment 2 in the graphic region is the same, ranking information of the fragment 1 indicates a top ranking, and ranking information of the fragment 2 indicates a low ranking. Therefore, the fragment 2 may be understood as covering the fragment 1. Therefore, the fragment 1 is a fragment that does not need to be drawn. Culling the fragment 1 can reduce instruction overheads of the fragment 1, thereby reducing overdrawing.

It may be understood that only two fragments are shown in this example, but there may be two or more superimposed layers, and there may also be two or more fragments with same position information.

Optionally, the overdraw culling module 412 is further configured to send a fragment outside the sub-region to the shader processor 42 based on the position information and the ranking information.

For example, it may be understood that, a region in which no special operation is performed in the graphic region is outside the sub-region, that is, no operation like a blend operation, a stencil comparison operation, or an instruction discard operation is performed outside the sub-region. In this case, the overdraw culling module 412 directly sends the fragment to the shader processor 42, that is, the overdraw culling module 412 does not process the fragment, but only transparently transmits the fragment to the shader processor 42. Therefore, a processing process of the fragment can be omitted, and efficiency of the graphics processing unit 40 can be improved.

Optionally, the indication information includes a region range of the sub-region and a first identifier, and the first identifier indicates that a range region involved in the overdraw culling operation is inside the region range of the sub-region.

FIG. 5 is a diagram of a region range of a sub-region according to an embodiment of this application. The region range of the sub-region may be a closed curve that may be described by using a mathematical formula, for example, a rectangle, a triangle, a circle, or an ellipse. A plurality of sub-regions may be simultaneously disposed in a graphic region of a drawing task.

A first identifier may indicate a range region involved in an overdraw culling operation is inside the closed curve. In an example, the first identifier may be true. In an application, a blend operation is defined as *SetBlendRegions(Region*regions,bool exclusive), where *regions is a region range of the sub-region, and when exclusive is the first identifier, it indicates that the overdraw culling operation takes effect in the region range of the sub-region. In addition, a stencil comparison operation is defined as *SetStencilRegions(Region*regions,bool exclusive). An instruction discard operation is defined as *SetShaderDiscardRegions(Region*regions,bool exclusive). A special operation is defined as *SetSpecialOpRegions(Region*regions,bool exclusive).

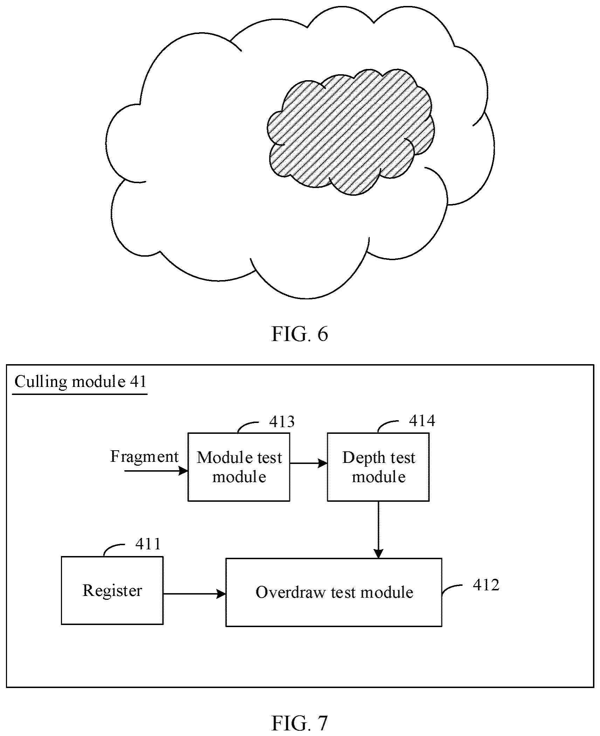

It may be understood that the region range of the sub-region may also be described by using an input image or texture. In this manner, a region that cannot be described by a mathematical formula can be expressed. FIG. 6 is a diagram of a region range of another sub-region according to an embodiment of this application. A pixel of an image corresponds to a region on a screen, for example, 1x2, 2x1, 2x2, 2x4, or 4x4, so that a region range of a sub-region is controlled more flexibly.

Optionally, indication information includes the region range of the sub-region and a second identifier, and the second identifier indicates that a range region involved in an overdraw culling operation is outside the region range of the sub-region.

For example, the second identifier may indicate that a range region involved in the overdraw culling operation is outside a closed curve. The definition of the operation in the application is still used as an example. When exclusive is the second identifier, it indicates that the overdraw culling operation takes effect outside the region range of the sub-region.

Therefore, the region range of the sub-region can be flexibly set by setting the first identifier and the second identifier, which is applicable to a plurality of drawing scenarios.

Optionally, the culling module 41 further includes a stencil test module 413; and the stencil test module 413 is configured to: receive a plurality of fragments, and determine, based on a result of comparison between a stencil reference value and stencil values of the plurality of fragments, whether to cull the fragments.

For example, the stencil test module 413 may perform a stencil test (stencil test) on the fragment. A stencil test procedure is as follows: The graphics processing unit 40 first reads a stencil value of a screen coordinate position of the fragment in a stencil buffer, and then compares the stencil value with a stencil reference value of the fragment. A comparison function may be specified by a skilled person. For example, the fragment is culled when the stencil value is greater than or equal to the stencil reference value, or the fragment is culled when the stencil value is less than or equal to the stencil reference value.

Therefore, the stencil test module 413 may perform preliminary culling on the fragment, to cull a fragment that does not need to be drawn, thereby effectively reducing overdrawing, reducing load of the shader processor 42, improving performance of the graphics processing unit 40, and reducing power consumption.

Optionally, the culling module 41 further includes a depth test module 414, and the plurality of fragments include a depth fragment; and the depth test module 414 is configured to determine, based on a result of comparison between a depth value of the depth fragment in the plurality of fragments and a value of a depth buffer, whether to cull the fragment.

For example, the depth test module 414 may perform a depth test (depth test) on the fragment. A procedure of the depth test is as follows: The graphics processing unit 40 compares a depth value of the fragment with a depth value that already exists in the depth buffer, where a comparison function may be specified by a skilled person. For example, the fragment is discarded when the depth value is greater than or equal to the depth value in the depth buffer, or the fragment is discarded when the depth value is less than or equal to the depth value in the depth buffer.

Therefore, the depth test module 414 may perform preliminary culling on the fragment, to cull a fragment that does not need to be drawn, thereby effectively reducing overdrawing, reducing load of the shader processor 42, improving performance of the graphics processing unit 40, and reducing power consumption. For fragment processing, a module test may be performed first, and then a depth test is performed. For a depthless fragment, the depth test module 414 does not perform culling, and transparently transmits the depthless fragment to the overdraw culling module 412. Therefore, a diagram of a structure of the culling module 41 is shown in FIG. 7. The culling module 41 includes a register 411, an overdraw culling module 412, a stencil test module 413, and a depth test module 414. A processing procedure of the culling module 41 is as follows: The stencil test module 413 first performs the module test on the fragment, then the depth test module 414 performs the depth test on the fragment, and finally, the overdraw culling module 412 performs an overdraw culling operation based on culling results of the stencil test module 413 and the depth test module 414, to cull a fragment that does not need to be drawn, and send only a fragment that needs to be drawn to the shader processor 42.

In addition, the graphics processing unit 40 may further include a rasterization module 43 (rast unit). The rasterization module 43 is configured to convert vertex data of the drawing task into a plurality of fragments. Each element in the fragment corresponds to one pixel in the frame buffer. Rasterization is essentially a process of converting a mathematical description of an object and color information related to the object into a pixel used for a corresponding position on a screen and a color used to fill a pixel.

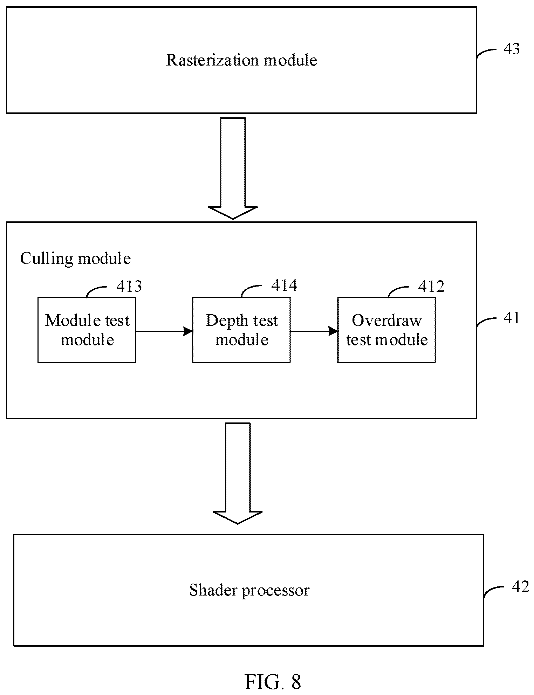

In general, FIG. 8 is a processing flowchart of a graphics processing unit according to an embodiment of this application. A flowchart of the graphics processing unit is as follows: The rasterization module 43 converts vertex data in a drawing task into a plurality of fragments, the stencil test module 413 and the depth test module 414 in the culling module 41 perform preliminary culling, the overdraw culling module 412 records, in combination with culling results of the stencil test module 413 and the depth test module 414, position information of all fragments in the graphic region and ranking information of all the fragments involved in drawing, culls a fragment that does not contribute to a pixel color, identifies a fragment that finally affects the pixel color, and sends the fragment that finally affects the pixel color to the shader processor 42 for shading.

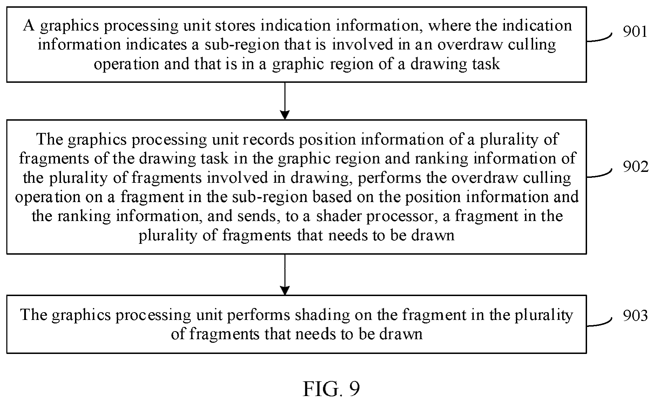

Embodiments of this application provide a graphics drawing method applied to the graphics processing unit shown in FIG. 4. FIG. 9 is a flowchart of a graphics drawing method according to an embodiment of this application. The method includes the following procedure.

Step 901: The graphics processing unit stores indication information, where the indication information indicates a sub-region that is involved in an overdraw culling operation and that is in a graphic region of a drawing task.

Step 902: The graphics processing unit records position information of a plurality of fragments of the drawing task in the graphic region and ranking information of the plurality of fragments involved in drawing, performs the overdraw culling operation on a fragment in the sub-region based on the position information and the ranking information, and sends, to the shader processor, a fragment in the plurality of fragments that needs to be drawn.

Step 903: The graphics processing unit performs shading on the fragment in the plurality of fragments that needs to be drawn.

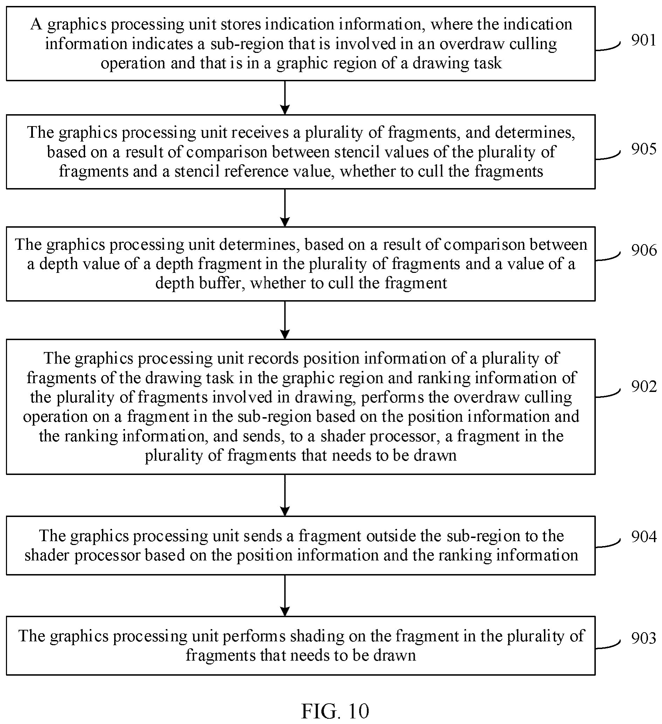

To resolve a problem that the shader processor in the graphics processing unit cannot execute a culling algorithm in a scenario in which a blend operation, a stencil comparison operation, and an instruction discard operation occur, the graphics processing unit in embodiments of this application first determines, based on the indication information stored in the register, the sub-region involved in the overdraw culling operation, and then, before the shader processor performs shading on the fragment, the overdraw culling module other than the shader processor performs the overdraw culling operation on the sub-region involved in the overdraw culling operation. Even if a fragment without depth information in a two-dimensional scene exists in the sub-region involved in the overdraw culling operation, the overdraw culling operation may still be performed on the fragment without depth information in the two-dimensional scene. This not only can avoid a problem that the shader processor cannot execute the culling algorithm in the scenario in which the blend operation, the stencil comparison operation, and the instruction discard operation occur, but also can send the fragment that needs to be drawn to the shader processor on a basis of culling a fragment that does not need to be drawn in the sub-region, so that overdrawing can be effectively reduced, load of the shader processor can be reduced, performance of the graphics processing unit can be improved, and power consumption can be reduced. Optionally, FIG. 10 is a flowchart of another graphics drawing method according to an embodiment of this application. Before step 903, the method may further include the following step.

Step 904: The graphics processing unit sends a fragment outside the sub-region to the shader processor based on the position information and the ranking information.

For example, for the fragment outside the sub-region, the overdraw culling module does not process the fragment, and only transparently transmits the fragment to the shader processor. Therefore, a processing process of the fragment can be omitted, and efficiency of the graphics processing unit can be improved. For an implementation of step 904, refer to the descriptions of the graphics processing unit in the foregoing embodiments.

Optionally, before step 902, the method may further include the following step.

Step 905: The graphics processing unit receives a plurality of fragments, and determines, based on a result of comparison between a stencil reference value and stencil values of the plurality of fragments, whether to cull the fragments.

For example, the stencil test module may perform preliminary culling on a fragment, to cull a fragment that does not need to be drawn, thereby effectively reducing overdrawing, reducing load of the shader processor, improving performance of the graphics processing unit, and reducing power consumption. For an implementation of step 905, refer to the descriptions of the graphics processing unit in the foregoing embodiments.

Optionally, after step 905 and before step 902, the method may further include the following step.

Step 906: The graphics processing unit determines, based on a result of comparison between a depth value of a depth fragment in the plurality of fragments and a value of a depth buffer, whether to cull the fragment.

For example, the depth test module may perform preliminary culling on a fragment, to cull a fragment that does not need to be drawn, thereby effectively reducing overdrawing, reducing load of the shader processor, improving performance of the graphics processing unit, and reducing power consumption. For an implementation of step 906, refer to the descriptions of the graphics processing unit in the foregoing embodiments.

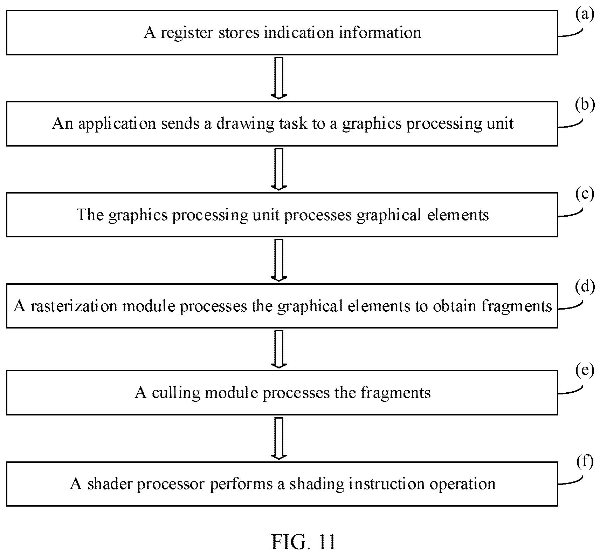

In general, FIG. 11 is a processing flowchart of a graphics processing unit according to an embodiment of this application. The following procedure is included.
(a): A register stores indication information.
(b): An application sends a drawing task to a graphics processing unit.
(c): The graphics processing unit processes graphical elements.
(d): A rasterization module processes the graphical elements to obtain fragments.
(e): A culling module processes the fragments.
(f): A shader processor performs a shading instruction operation.

An embodiment of this application further provides a computer storage medium. The computer storage medium stores computer instructions. When the computer instructions are run on an electronic device, the electronic device is enabled to perform the related method steps, to implement the graphics drawing method in the foregoing embodiments.

An embodiment of this application further provides a computer program product. When the computer program product runs on a computer, the computer performs the foregoing related steps, so as to implement the graphics drawing method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the graphics drawing method performed by the electronic device in the foregoing method embodiments.

The graphics processing unit, the computer storage medium, the computer program product, or the chip provided in embodiments is configured to perform the corresponding method provided above. Therefore, for beneficial effects that can be achieved by the graphics processing unit, the computer storage medium, the computer program product, or the chip, refer to the beneficial effects in the corresponding method provided above. Details are not described herein again.

Based on the descriptions of the implementations, a person skilled in the art may understand that for the purpose of convenient and brief description, division into the functional modules is merely used as an example for description. During actual application, the functions may be allocated to different functional modules for completion based on a requirement. In other words, an inner structure of an apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A graphics processing unit, wherein the graphics processing unit comprises a culling module and a shader processor, the culling module comprises a register and an overdraw culling module, and an output end of the overdraw culling module is coupled to an input end of the shader processor;
the register is configured to store indication information, wherein the indication information indicates a sub-region, involved in an overdraw culling operation, in a graphic region of a drawing task;
the overdraw culling module is configured to: record position information of a plurality of fragments of the drawing task in the graphic region and ranking information of the plurality of fragments involved in drawing, perform the overdraw culling operation on a fragment in the sub-region based on the position information and the ranking information, and send, to the shader processor, a fragment in the plurality of fragments that needs to be drawn; and
the shader processor is configured to perform shading on the fragment in the plurality of fragments that needs to be drawn.

2. The graphics processing unit according to claim 1, wherein the overdraw culling operation is culling fragments, in the plurality of fragments, that have the same position information and whose ranking information indicates a top ranking.

3. The graphics processing unit according to claim 1 or 2, wherein the overdraw culling module is further configured to send a fragment outside the sub-region to the shader processor based on the position information and the ranking information.

4. The graphics processing unit according to claim 1, wherein the indication information comprises a region range of the sub-region and a first identifier, and the first identifier indicates that a range region involved in the overdraw culling operation is inside the region range of the sub-region.

5. The graphics processing unit according to claim 1, wherein the indication information comprises a region range of the sub-region and a second identifier, and the second identifier indicates that a range region involved in the overdraw culling operation is outside the region range of the sub-region.

6. The graphics processing unit according to claim 1, wherein the culling module further comprises a stencil test module; and
the stencil test module is configured to: receive a plurality of fragments, and determine, based on a result of comparison between a stencil reference value and stencil values of the plurality of fragments, whether to cull the fragments.

7. The graphics processing unit according to claim 6, wherein the culling module further comprises a depth test module, and the plurality of fragments comprise a depth fragment; and
the depth test module is configured to determine, based on a result of comparison between a depth value of the depth fragment in the plurality of fragments and a value of a depth buffer, whether to cull the fragment.

8. A graphics drawing method, wherein the method is applied to a graphics processing unit, the graphics processing unit comprises a culling module and a shader processor, the culling module comprises a register and an overdraw culling module, an output end of the overdraw culling module is coupled to an input end of the shader processor, and the method comprises:
storing indication information, wherein the indication information indicates a sub-region that is involved in an overdraw culling operation and that is in a graphic region of a drawing task;
recording position information of a plurality of fragments of the drawing task in the graphic region and ranking information of the plurality of fragments involved in drawing, performing the overdraw culling operation on a fragment in the sub-region based on the position information and the ranking information, and sending, to the shader processor, a fragment in the plurality of fragments that needs to be drawn; and
performing shading on the fragment in the plurality of fragments that needs to be drawn.

9. The method according to claim 8, wherein the overdraw culling operation is culling fragments, in the plurality of fragments, that have the same position information and whose ranking information indicates a top ranking.

10. The method according to claim 8 or 9, wherein before performing shading on the fragment in the plurality of fragments that needs to be drawn, the method further comprises:
sending a fragment outside the sub-region to the shader processor based on the position information and the ranking information.

11. The method according to claim 8, wherein the indication information comprises a region range of the sub-region and a first identifier, and the first identifier indicates that a range region involved in the overdraw culling operation is inside the region range of the sub-region.

12. The method according to claim 8, wherein the indication information comprises a region range of the sub-region and a second identifier, and the second identifier indicates that a range region involved in the overdraw culling operation is outside the region range of the sub-region.

13. The method according to claim 8, wherein the culling module further comprises a stencil test module, and before recording the position information of the plurality of fragments of the drawing task in the graphic region and the ranking information of the plurality of fragments involved in drawing, the method further comprises:
receiving a plurality of fragments, and determining, based on a result of comparison between a stencil reference value and stencil values of the plurality of fragments, whether to cull the fragments.

14. The method according to claim 9, wherein the culling module further comprises a depth test module, the plurality of fragments comprise a depth fragment, and the method further comprises:
determining, based on a result of comparison between a depth value of the depth fragment in the plurality of fragments and a value of a depth buffer, whether to cull the fragment.

15. A computer-readable storage medium, comprising computer instructions, wherein when the computer instructions are run on an electronic device, the electronic device is enabled to perform the method according to any one of claims 8 to 14.
